(19) Europäisches Patentamt
European Patent Office
Office européen des brevets

(11) EP 4 361 218 A1

(12) EUROPEAN PATENT APPLICATION
published in accordance with Art. 153(4) EPC

(43) Date of publication:
**01.05.2024 Bulletin 2024/18**

(21) Application number: **22828421.2**

(22) Date of filing: **21.06.2022**

(51) International Patent Classification (IPC):
***C08L 67/00*** *(2006.01)* ***C08G 63/84*** *(2006.01)*

(52) Cooperative Patent Classification (CPC):
**C08G 63/84; C08L 67/00;** Y02W 30/62

(86) International application number:
**PCT/JP2022/024734**

(87) International publication number:
**WO 2022/270505 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.06.2021 JP 2021103872**

(71) Applicant: **TOYOBO CO., LTD.**
**Osaka-shi, Osaka 530-0001 (JP)**

(72) Inventors:
- **SASAI Tamayo**
  **Otsu-shi, Shiga 520-0292 (JP)**
- **KINAMI Maki**
  **Otsu-shi, Shiga 520-0292 (JP)**
- **YAMAMOTO Yu**
  **Otsu-shi, Shiga 520-0292 (JP)**
- **NISHINAKA Fumiaki**
  **Otsu-shi, Shiga 520-0292 (JP)**
- **MORIYAMA Nobuo**
  **Otsu-shi, Shiga 520-0292 (JP)**

(74) Representative: **Müller-Boré & Partner Patentanwälte PartG mbB**
**Friedenheimer Brücke 21**
**80639 München (DE)**

# (54) POLYESTER RESIN COMPOSITION PRODUCTION METHOD, METHOD FOR REGENERATING RECOVERED POLYESTER RESIN, AND POLYESTER RESIN COMPOSITION

(57) An object of the present invention is to provide a method for producing a polyester resin composition with less coloring and less decrease in molecular weight even after several times of recycling with used polyester resins produced with at least one type of polymerization catalyst selected from the group consisting of an antimony compound, a titanium compound, and a germanium compound. Specifically, an object of the present invention is to provide a method for producing the polyester resin composition (C) comprising a step of mixing a polyester resin (A) collected for recycling and a polyester resin (B) containing an aluminum compound and a phosphorous compound, wherein the polyester resin (A) satisfies the following (1) to (3), the polyester resin (B) comprises aluminum element and phosphorous element at predetermined contents, and the polyester resin (B) comprises the aluminum element and the phosphorous element in predetermined residual mole ratio of the phosphorous element with respect to the aluminum element:
(1) the polyester resin (A) comprises at least one element selected from the group consisting of antimony element, titanium element, and germanium element,
(2) the polyester resin (A) comprises at least one of the antimony element, the titanium element, and the germanium element at a total content of from 2 to 500 ppm by mass, and
(3) the polyester resin (A) has an intrinsic viscosity of from 0.5 to 0.8 dl/g.



Processed by Luminess, 75001 PARIS (FR)

## Description

TECHNICAL FIELD

The present invention relates to a method for producing a polyester resin composition, a method for regenerating a polyester resin collected for recycling, and a polyester resin composition.

BACKGROUND ART

The polyester resins represented by polyethylene terephthalate (PET) and polyethylene naphthalate (PEN) have high transparency, and excellent mechanical and chemical characteristics. The polyester resins have been used in various fields according to their characteristics, for example, as fibers for clothing and industrial materials, films or sheets for packaging and industrial purposes, and hollow molded bodies for bottles and engineering plastics.

In recent years, for example, hollow molded bodies produced from polyester resins have become more essential in our daily lives. However, with growing use of hollow molded bodies, various problems such as resource depletion, an increase in marine debris, and global warming have been caused. As a method to solve such problems, so-called recycling system involving collection and regeneration of hollow molded bodies has attracted attentions. In the system, hollow molded bodies including used polyester bottles are collected and re-molded into molded bodies, for example, polyester bottles, fibers, and nonwoven fabrics, for reuse.

When polyester resins produced with an antimony compound, a titanium compound, or a germanium compound as a widely used polymerization catalyst are collected after use and then regenerated, however, coloring and a decrease in molecular weight of recycled polyester resin are caused due to degradation of the collected polyester resin. Therefore, improvements in the coloring and the decrease in molecular weight of the recycled polyester resin are needed.

To solve above problems, methods involving addition of a hindered phenol compound are known specifically in the production of polyester resin with an antimony compound, a titanium compound, or a germanium compound as a polymerization catalyst (see, for example, Patent Documents 1 and 2).

According to the methods described in Patent Documents 1 and 2, thermal oxidation stability of polyester resin compositions is improved by employing such methods, however, the polyester resin compositions should have further improved characteristics to prevent degradation of physical characteristics of the polyester resin compositions when recycled.

Against such backgrounds, the present inventors have come to a finding of a catalyst which enabled production of polyester with high thermal stability, specifically, finding of a catalyst containing an aluminum compound and a phosphorus compound having hindered phenol structure as described in Patent Documents 3 and 4. However, recycling of used polyester resin produced with at least one type of polymerization catalyst selected from an antimony compound, a titanium compound, and a germanium compound has not been examined. In the method for producing polyester resin with the polymerization catalyst containing the aluminum compound and the phosphorus compound, the cost of the catalyst needed for the polymerization was high due to a large amount of the catalyst added and a high cost of the phosphorus compound. In order to produce high-quality polyester resin with polymerization activity of the catalyst being kept high, the amounts of the aluminum compound as the catalyst and the phosphorus compound had to be increased, and such an increased amounts resulted in an increase in catalyst cost.

PRIOR ART DOCUMENT

PATENT DOCUMENT

Patent Document 1: WO-A1-2013/154042
Patent Document 2: WO-A1-2013/154043
Patent Document 3: WO-A1-2007/032325
Patent Document 4: JP-A1-2006-169432

SUMMARY OF THE INVENTION

PROBLEMS TO BE SOLVED BY THE INVENTION

The present invention has been made to solve such problems of the conventional art. It is an object of the present invention to provide a method for producing a polyester resin composition (hereinafter, referred to as a highly

recyclable polyester resin composition) with less coloring and less decrease in molecular weight even after several times of recycling of used polyester resin produced with at least one type of polymerization catalyst selected from the group consisting of an antimony compound, a titanium compound, and a germanium compound. In addition, it is an object of the present invention to provide a method for regenerating a collected polyester resin and a polyester resin composition. Further, it is another object of the present invention to provide a method for producing a polyester resin composition, a method for regenerating a collected polyester resin, and a polyester resin composition in which cost decreases.

The present invention has the following features.

1. A method for producing a polyester resin composition (C), comprising a step of mixing a polyester resin (A) collected for recycling and a polyester resin (B) comprising an aluminum compound and a phosphorus compound, wherein the polyester resin (A) satisfies the following (1) to (3) and the polyester resin (B) satisfies the following (4) to (6):

(1) the polyester resin (A) comprises at least one element selected from the group consisting of antimony element, titanium element, and germanium element,
(2) the polyester resin (A) comprises at least one of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of the phosphorus element with respect to the aluminum element of 1.32 or more and 1.80 or less.

2. The method for producing the polyester resin composition (C) according to above 1, wherein the polyester resin (B) has an intrinsic viscosity of 0.56 dl/g or more.
3. The method for producing the polyester resin composition (C) according to above 1 or 2, wherein the polyester resin (B) comprises dialkyl 3,5-di-tert-butyl-4-hydroxybenzyl phosphonate as the phosphorus compound.
4. The method for producing the polyester resin composition (C) according to any one of above 1 to 3, wherein an amount of the polyester resin (A) with respect to 100 parts by mass of a total amount of the polyester resin (A) and the polyester resin (B) is from 5 to 95 parts by mass.
5. A method for producing a hollow molded body (D), comprising a step of melt-molding the polyester resin composition (C) produced by the method according to any one of above 1 to 4.
6. A method for regenerating a polyester resin (A) collected for recycling, comprising a step of mixing the polyester resin (A) and a polyester resin (B) comprising an aluminum compound and a phosphorus compound, wherein the polyester resin (A) satisfies the following (1) to (3) and the polyester resin (B) satisfies the following (4) to (6):

(1) the polyester resin (A) comprises at least one element selected from the group consisting of antimony element, titanium element, and germanium element,
(2) the polyester resin (A) comprises at least one element of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of the phosphorus element with respect to the aluminum element of 1.32 or more and 1.80 or less.

7. The method for regenerating the polyester resin (A) according to above 6, wherein the polyester resin (B) has an intrinsic viscosity of 0.56 dl/g or more.
8. The method for regenerating the polyester resin (A) according to above 6 or 7, wherein the polyester resin (B) comprises dialkyl 3,5-di-tert-butyl-4-hydroxybenzyl phosphonate as the phosphorus compound.
9. The method for regenerating the polyester resin (A) according to any one of above 6 to 8, wherein an amount of the polyester resin (A) with respect to 100 parts by mass of a total amount of the polyester resin (A) and the polyester resin (B) is from 5 to 95 parts by mass.
10. A polyester resin composition (C) comprising a mixture of a polyester resin (A) collected for recycling and a polyester resin (B) comprising an aluminum compound and a phosphorus compound, wherein the polyester resin (A) satisfies the following (1) to (3) and the polyester resin (B) satisfies the following (4) to (6):

(1) the polyester resin (A) comprises at least one element selected from the group consisting of antimony

element, titanium element, and germanium element,
(2) the polyester resin (A) comprises at least one element of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of the phosphorus element with respect to the aluminum element of 1.32 or more and 1.80 or less.

11. The polyester resin composition (C) according to above 10, wherein the polyester resin (B) has an intrinsic viscosity of 0.56 dl/g or more.
12. The polyester resin composition (C) according to above 10 or 11, wherein the polyester resin (B) comprises dialkyl 3,5-di-tert-butyl-4-hydroxybenzyl phosphonate as the phosphorus compound.
13. The polyester resin composition (C) according to any one of above 10 to 12, wherein an amount of the polyester resin (A) with respect to 100 parts by mass of a total amount of the polyester resin (A) and the polyester resin (B) is from 5 to 95 parts by mass.
14. A hollow molded body (D) comprising the polyester resin composition (C) according to any one of above 10 to 13.

The production of the polyester resin composition (C) through mixing of the polyester resin (B) comprising predetermined amounts of aluminum compound and phosphorus compound with the polyester resin (A) collected for recycling comprising at least one element selected from the group consisting of antimony element, titanium element, and germanium element enables prevention of coloring and a decrease in molecular weight of the polyester resin composition (C), leading to low-cost production of highly recyclable polyester resin composition. In other words, used polyester resin (A) collected for recycling comprising at least one element selected from the group consisting of antimony element, titanium element, and germanium element can be regenerated to highly recyclable polyester resin composition (C).

MODE FOR CARRYING OUT THE INVENTION

In the present invention, the polyester resin composition (hereinafter may be referred to as polyester resin composition (C)) is produced by mixing a polyester resin (A) collected for recycling and a polyester resin (B) comprising an aluminum compound and a phosphorus compound. In other words, the polyester resin (A) collected for recycling can be regenerated by mixing the polyester resin (A) and the polyester resin (B) comprising an aluminum compound and a phosphorus compound. In this specification, a polyester resin composition is a mixture of a polyester resin collected for recycling and a polyester resin that is not collected material.

[Polyester resin (A)]

The polyester resin (A) comprises an ethylene terephthalate constituent unit preferably in an amount of 50 mol% or more, more preferably 70 mol% or more, further preferably 80 mol% or more, and particularly preferably 90 mol% or more. As a polycarboxylic acid component other than terephthalic acid and a polyhydric alcohol component other than ethylene glycol, the polyester resin (A) may comprise components that the polyester resin (B) may comprise as described later.
The polyester resin (A) comprises at least one element selected from the group consisting of antimony element, titanium element, and germanium element, in other words, the polyester resin (A) is produced with an appropriate amount of at least one type of polymerization catalyst selected from the group consisting of an antimony compound, a titanium compound, and a germanium compound.
The polyester resin (A) comprises at least one of the antimony element, the titanium element, and the germanium element at a total content of from 2 to 500 ppm by mass, preferably 5 to 400 ppm by mass, more preferably 10 to 300 ppm by mass, and further preferably 50 to 250 ppm by mass. The total content of more than 500 ppm by mass may cause insufficient intrinsic viscosity retention rate of the polyester resin composition (C). Throughout the specification, the term ‘ppm by mass’ indicates $10^{-4}$% by mass.
The polyester resin (A) is a polyester resin collected after use for recycling. The shape of the polyester resin (A) is not particularly limited, and preferably has the shape which enables easy mixing of the polyester resin (A) with the polyester resin (B). The polyester resin (A) may be in the shape of, for example, chips, flakes, or powder.
The polyester resin (A) has an intrinsic viscosity of from 0.5 to 0.8 dl/g or more, and preferably from 0.7 to 0.8 dl/g. When the polyester resin (A) has an intrinsic viscosity of less than above range, the polyester resin composition (C) produced by using the polyester resin (A) may have insufficient mechanical strength and impact resistance. In

contrast, when the polyester resin (A) has an intrinsic viscosity exceeding above range, molding process of the polyester resin composition (C) may be difficult.

The polyester resin (A) preferably has an intrinsic viscosity retention rate of 92% or less, more preferably 91% or less, further preferably 90% or less, and particularly preferably 89% or less. When the intrinsic viscosity retention rate of the polyester resin (A) exceeds 92%, an effect of improvement in recyclability by blending the polyester resin (B) may be insufficient. The method for measuring the intrinsic viscosity retention rate will be described later.

The polyester resin (A) preferably consists of a polyester resin produced with at least one type of a polymerization catalyst selected from the group consisting of an antimony compound, a titanium compound, and a germanium compound. The polyester resin (A) may comprise the polyester resin produced with a polymerization catalyst containing an aluminum compound and a phosphorus compound, however, the amounts of the compounds should preferably be small. The amount of the polyester resin produced with the at least one type of polymerization catalyst selected from the group consisting of the antimony compound, the titanium compound, and the germanium compound in the polyester resin (A) is preferably more than 50% by mass, more preferably 70% by mass or more, and further preferably 80% by mass or more.

[Polyester resin (B)]

The polyester resin (B) comprises an aluminum compound and a phosphorus compound, in other words, the polyester resin (B) is produced with a polymerization catalyst containing an aluminum compound and a phosphorus compound in an appropriate amount as a catalyst. The polyester resin (B) is a polyester resin for regeneration in which the polyester resin (A) collected for recycling can be regenerated by mixing with the polyester resin (B).

The polyester resin (B) is a polymer formed from at least one type selected from polycarboxylic acids and ester-forming derivatives thereof with at least one type selected from polyhydric alcohols and ester-forming derivatives thereof.

<Polycarboxylic acid component>

The polyester resin (B) comprises a dicarboxylic acid as a main polycarboxylic acid component. When the polyester resin (B) comprises a dicarboxylic acid as a main polycarboxylic acid component, the polyester resin (B) comprises a dicarboxylic acid in an amount of more than 50 mol%, preferably 70 mol% or more, more preferably 80 mol% or more, and further preferably 90 mol% or more with respect to whole polycarboxylic acid components. The polyester resin (B) may preferably comprise two or more types of dicarboxylic acids with their total amounts controlled to above range.

Examples of the dicarboxylic acid include saturated aliphatic dicarboxylic acids such as oxalic acid, malonic acid, succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid, 1,3-cyclobutane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, and dimer acid, and ester-forming derivatives thereof, unsaturated aliphatic dicarboxylic acids such as fumaric acid, maleic acid, and itaconic acid, and ester-forming derivatives thereof; and aromatic dicarboxylic acids such as orthophthalic acid, isophthalic acid, terephthalic acid, 5-(alkali metal)sulfoisophthalic acids, diphenic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 4,4'-biphenyldicarboxylic acid, 4,4'-biphenyl sulfone dicarboxylic acid, 4,4'-biphenyl ether dicarboxylic acid, 1,2-bis(phenoxy)ethane-p,p'-dicarboxylic acid, pamoic acid, and anthracene dicarboxylic acid, and ester-forming derivatives thereof.

More preferably, the polyester resin (B) comprises terephthalic acid or an ester-forming derivative thereof, or naphthalene dicarboxylic acid or an ester-forming derivative thereof as a main polycarboxylic acid component. Examples of the naphthalene dicarboxylic acid or the ester-forming derivative thereof include 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, and ester-forming derivatives thereof.

When the polyester resin (B) comprises the terephthalic acid or the ester-forming derivative thereof, or the naphthalene dicarboxylic acid or the ester-forming derivative thereof as a main polycarboxylic acid component, the polyester resin (B) comprises the terephthalic acid or the ester-forming derivative thereof, or the naphthalene dicarboxylic acid or the ester-forming derivative thereof totally in an amount of more than 50 mol%, preferably 70 mol% or more, more preferably 80 mol% or more, and further preferably 90 mol% or more with respect to whole polycarboxylic acid components.

Particularly preferably, the polyester resin (B) comprises terephthalic acid, 2,6-naphthalene dicarboxylic acid, or ester-forming derivatives thereof. The polyester resin (B) may comprise other dicarboxylic acids as constituent components.

As polycarboxylic acids other than those dicarboxylic acids, the polyester resin (B) may comprise a trivalent or higher polyvalent carboxylic acid or hydroxycarboxylic acid in a small amount, and preferably a trivalent to tetravalent

polyvalent carboxylic acid. Examples of the polyvalent carboxylic acid include ethane tricarboxylic acid, propane tricarboxylic acid, butane tetracarboxylic acid, pyromellitic acid, trimellitic acid, trimesic acid, 3,4,3',4'-biphenyltetracarboxylic acid, and ester-forming derivatives thereof. The polyester resin (B) comprises a trivalent or higher polyvalent carboxylic acid in an amount of preferably 20 mol% or less, more preferably 10 mol% or less, and further preferably 5 mol% or less with respect to whole polycarboxylic acid components. In case where the polyester resin (B) comprises two or more types of trivalent or higher polyvalent carboxylic acids, the total amount of the carboxylic acids is preferably controlled to above range.

Examples of the hydroxycarboxylic acid include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexane carboxylic acid, and ester-forming derivatives thereof. The polyester resin (B) comprises the hydroxycarboxylic acid in an amount of preferably 20 mol% or less, more preferably 10 mol% or less, and further preferably 5 mol% or less with respect to whole polycarboxylic acid components. The polyester resin (B) may preferably comprise two or more types of hydroxycarboxylic acids with their total amounts controlled to above range.

Examples of the ester-forming derivatives of the polyvalent carboxylic acids and the hydroxycarboxylic acids include alkyl esters, acid chlorides, and acid anhydrides thereof.

<Polyhydric alcohol component>

The polyester resin (B) comprises glycol as a main polyhydric alcohol component. The polyester resin (B) comprises glycol as a main polyhydric alcohol component in an amount of more than 50 mol%, preferably 70 mol% or more, more preferably 80 mol% or more, and further preferably 90 mol% or more with respect to whole polyhydric alcohol components. The polyester resin (B) may comprise two or more types of glycols with their total amounts controlled to above range.

Examples of the glycol include: alkylene glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentylglycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, and 1,12-dodecanediol; aliphatic glycols such as polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols.

The polyester resin (B) preferably comprises an alkylene glycol, and more preferably ethylene glycol, 1,3-propylene glycol, 1,4-butylene glycol, or 1,4-cyclohexanedimethanol among the glycols. In addition, the alkylene glycols may have a substituent or alicyclic structure in the molecular chain thereof, and the polyester resin (B) may comprise two or more types of the alkylene glycols at the same time.

The polyester resin (B) may preferably comprise small amount of a trivalent or higher polyhydric alcohol as a polyhydric alcohol other than the glycols, and preferably the trivalent to tetravalent polyhydric alcohol. Examples of the trivalent or higher polyhydric alcohol include trimethylolmethane, trimethylolethane, trimethylolpropane, pentaerythritol, glycerol, and hexanetriol.

The polyester resin (B) comprises the trivalent or higher polyhydric alcohol in an amount of 20 mol% or less, more preferably 10 mol% or less, and further preferably 5 mol% or less with respect to whole polyhydric alcohol components. The polyester resin (B) may comprise two or more types of the trivalent or higher polyhydric alcohols with their total amounts controlled to above range.

Further, the polyester resin (B) may comprise a cyclic ester. Examples of the cyclic ester include ε-caprolactone, β-propiolactone, β-methyl-β-propiolactone, δ-valerolactone, glycolide, and lactide. The ester-forming derivative of the polyhydric alcohol is exemplified by an ester of the polyhydric alcohol with lower aliphatic carboxylic acid such as acetate.

The polyester resin (B) comprises the cyclic ester in an amount of preferably 20 mol% or less, more preferably 10 mol% or less, and further preferably 5 mol% or less with respect to a sum amount of a polycarboxylic acid component and a polyhydric alcohol component. The polyester resin (B) may comprise two or more types of the cyclic esters with their total amounts controlled to above range.

The polyester resin (B) is preferably a polymer consisting of one type of a monomer selected from ethylene terephthalate, butylene terephthalate, propylene terephthalate, 1,4-cyclohexanedimethylene terephthalate, ethylene naphthalate, butylene naphthalate, and propylene naphthalate. Alternatively, the polyester resin (B) is preferably a copolymer consisting of two or more of above monomers, more preferably a copolymer consisting of polyethylene terephthalate or ethylene terephthalate and at least one of above monomers other than ethylene terephthalate, and particularly preferably polyethylene terephthalate. The copolymer consisting of ethylene terephthalate and at least one of above monomers other than ethylene terephthalate comprises a component derived from the ethylene terephthalate

monomer in an amount of preferably 70 mol% or more, more preferably 80 mol% or more, and further preferably 90 mol% or more.

<Polymerization catalyst>

As described above, the polyester resin (B) is produced with a polymerization catalyst containing an aluminum compound and a phosphorus compound.

(Aluminum compound)

The aluminum compound constituting the polymerization catalyst for producing the polyester resin (B) is not particularly limited as long as the aluminum compound is soluble in a solvent, and a known aluminum compound can constitute the polymerization catalyst without limitation. Examples of the aluminum compound include: carboxylates such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate, and aluminum salicylate; inorganic acid salts such as aluminum chloride, aluminum hydroxide, aluminum hydroxychloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum isopropoxide, aluminum n-butoxide, and aluminum t-butoxide; chelate compounds such as aluminum acetylacetonate, aluminum ethylacetoacetate, and aluminum ethylacetoacetate di-iso-propoxide; and organic aluminum compounds such as trimethylaluminum and triethylaluminum and partially hydrolyzed products thereof, reaction products composed of aluminum alkoxides or aluminum chelate compounds and hydroxycarboxylic acids, composite oxides of aluminum such as aluminum oxide, ultrafine particle aluminum oxide, aluminum silicate, and those containing aluminum and titanium, silicon, zirconium, alkali metals, alkaline earth metals, or the like; etc. Among these compounds, at least one type of a compound selected from carboxylates, inorganic acid salts, and chelate compounds is preferable, at least one compound selected from aluminum acetate, basic aluminum acetate, aluminum chloride, aluminum hydroxide, aluminum hydroxychloride, and aluminum acetylacetonate is more preferable, at least one compound selected from aluminum acetate, basic aluminum acetate, aluminum chloride, aluminum hydroxide, aluminum hydroxychloride, and aluminum acetylacetonate is further preferable, at least one compound selected from aluminum acetate and basic aluminum acetate is particularly preferable, and basic aluminum acetate is most preferable.

The aluminum compound is preferably an aluminum compound soluble in solvents such as water and glycol. In the production of the polyester resin (B), solvents such as water and alkylene glycols are available. Examples of the alkylene glycol include ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. The solvent is preferably at least one solvent selected from water, ethylene glycol, trimethylene glycol, and tetramethylene glycol, and further preferably water or ethylene glycol.

The polyester resin (B) comprises aluminum element at a content of from 9 to 20 ppm by mass, preferably 9 to 19 ppm by mass, more preferably 10 to 17 ppm by mass, and further preferably 12 to 17 ppm by mass. The aluminum element content of less than 9 ppm by mass prevents the polymerization catalyst from working with sufficient polymerization activity. In contrast, the aluminum element content of more than 20 ppm by mass causes an increase in the amount of aluminum-based foreign matter due to relationship with the content of the phosphorus element as set forth below, in addition to an increase in catalyst cost.

(Phosphorus compound)

The phosphorus compound constituting the polymerization catalyst for producing the polyester resin (B) is not particularly limited, and the phosphorus compound is preferably a phosphonic acid-based compound or a phosphinic acid-based compound because of their abilities of increasing catalytic activity. Among them, the phosphonic acid-based compound is more preferable because of its significantly high ability of increasing catalytic activity.

Among above phosphorus compounds, preferred is the phosphorus compound having phosphorus element and phenolic structure in the same molecule. The phosphorus compound is not particularly limited as long as the compound has phosphorus element and phenolic structure in the same molecule, and one or two or more of compounds selected from the group consisting of phosphonic acid-based compounds having phosphorus element and phenolic structure in the same molecule and phosphinic acid-based compounds having phosphorus element and phenolic structure in the same molecule are preferable because of its high ability of increasing polymerization activity, and one or two or more types of the phosphonic acid-based compounds having phosphorus element and phenolic structure in the same molecule are more preferable because of its significantly high ability of increasing polymerization activity.

The phosphorus compound having phosphorus element and phenolic structure in the same molecule is exemplified by the compounds with the formulae of $P(=O)R^1(OR^2)(OR^3)$ and $P(=O)R^1R^4(OR^2)$. $R^1$ represents a hydrocarbon group with 6 to 50 carbon atoms having a phenol moiety, or a hydrocarbon group with 6 to 50 carbon atoms having a substituent such as a hydroxyl group, a halogen group, an alkoxyl group, or an amino group as well as phenolic structure. $R^4$ represents hydrogen, a hydrocarbon group with 1 to 50 carbon atoms, or a hydrocarbon group with 1 to 50 carbon atoms having a substituent such as a hydroxyl group, a halogen group, an alkoxyl group, or an amino group. $R^2$ and $R^3$ each independently represents hydrogen, a hydrocarbon group with 1 to 50 carbon atoms, or a hydrocarbon group with 1 to 50 carbon atoms having a substituent such as hydroxyl group or an alkoxyl group. The hydrocarbon group may have branching structure, alicyclic structure such as cyclohexyl group, or aromatic ring structure such as phenyl group or naphthyl group. The terminals of $R^2$ and $R^4$ may be bonded to each other.

The phosphorus compound having phosphorus element and phenolic structure in the same molecule is exemplified by p-hydroxyphenylphosphonic acid, dimethyl p-hydroxyphenyl phosphonate, diethyl p-hydroxyphenyl phosphonate, diphenyl p-hydroxyphenyl phosphonate, bis(p-hydroxyphenyl)phosphinic acid, methyl bis(p-hydroxyphenyl) phosphinate, phenyl bis(p-hydroxyphenyl) phosphinate, p-hydroxyphenyl phosphinic acid, methyl p-hydroxyphenyl phosphinate, phenyl p-hydroxyphenyl phosphinate.

In addition to the examples described above, the phosphorus compound having phosphorus element and phenolic structure in the same molecule is exemplified by a phosphorus compound having phosphorus element and hindered phenol structure in the same molecule (phenol structure in which at least one alkyl group having a tertiary carbon (preferably alkyl groups having a tertiary carbon in a benzyl position, such as t-butyl group and thexyl group; for example, neopentyl group) is bonded in one or two ortho-positions with respect to a hydroxyl group), preferably a phosphorus compound having phosphorus element and the following structure represented by Chemical Formula A in the same molecule, and more preferably the following dialkyl 3,5-di-tert-butyl-4-hydroxybenzyl phosphonate represented by Chemical Formula B. The phosphorus compound for the production of the polyester resin (B) is preferably the following dialkyl 3,5-di-tert-butyl-4-hydroxybenzyl phosphonate represented by Chemical Formula B, and may additionally contain a modified product of dialkyl 3,5-di-tert-butyl-4-hydroxybenzyl phosphonate. Details of the modified product will be described later.

[Chemical Formula 1]

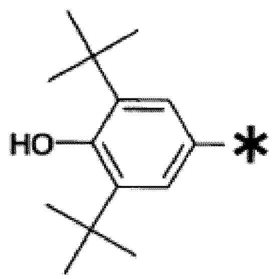
(Chemical Formula A)

(In Chemical Formula A, * represents a point of attachment.)

[Chemical Formula 2]

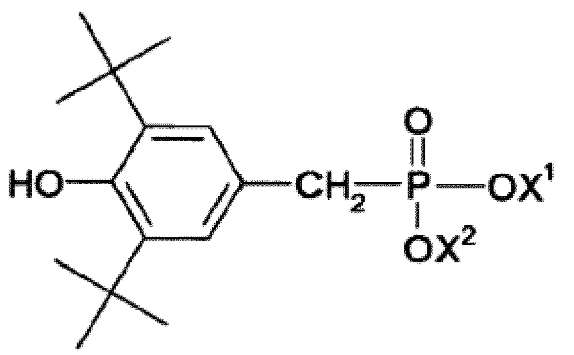
(Chemical Formula B)

(In Chemical Formula B, $X^1$ and $X^2$ each represents hydrogen, or an alkyl group with 1 to 4 carbon atoms)

In this specification, the polyester resin in which at least one type of hindered phenol structure is detected by a method involving measurement of P-NMR of a solution obtained by dissolving the polyester resin in hexafluoroisopropanol-based solvent refers to a polyester resin "having hindered phenol structure". In other words, the polyester resin (B) is preferably a polyester resin produced with a polymerization catalyst containing a phosphorus compound having phosphorus element and hindered phenol structure in the same molecule. The hindered phenol structure in the polyester resin (B) can be detected by the method described later.

In Chemical Formula B, each of $X^1$ and $X^2$ is preferably an alkyl group with 1 to 4 carbon atoms, and more preferably an alkyl group with 1 to 2 carbon atoms. In particular, an ethyl ester compound with 2 carbon atoms available as Irganox1222 (manufactured by BASF) is preferable due to its easy availability.

The phosphorus compound is preferably heat treated in a solvent before use. Details of the heat treatment will be described later. When the phosphorus compound is above dialkyl 3,5-di-tert-butyl-4-hydroxybenzyl phosphonate represented by Chemical Formula B, a part of the dialkyl 3,5-di-tert-butyl-4-hydroxybenzyl phosphonate undergoes a structural change in the heat treatment. For example, detachment of t-butyl group, hydrolysis of ethyl ester group, and changes to hydroxyethyl ester exchange structure (ester exchange structure with ethylene glycol) occur. Accordingly, structurally changed phosphorus compounds of dialkyl 3,5-di-tert-butyl-4-hydroxybenzyl phosphonate represented by Chemical Formula B are included in the phosphorus compounds of the present invention. The detachment of t-butyl group occurs significantly under high temperature environment in the polymerization step.

In the following, 9 phosphorus compounds derived from diethyl 3,5-di-tert-butyl-4-hydroxybenzyl phosphonate through partial structural changes are shown as phosphorus compounds. The content of each of the phosphorus compound after structural changes in glycol solution can be quantified by a method involving measurement of P-NMR.

[Chemical Formula 3]

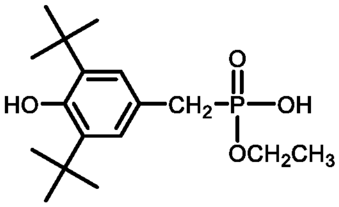
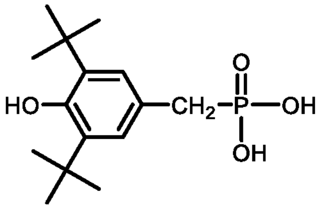
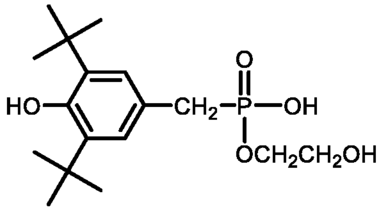

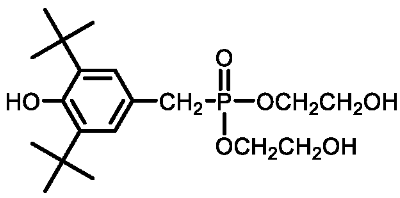
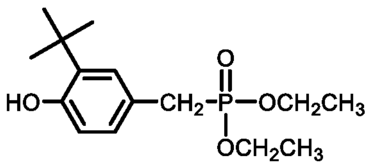
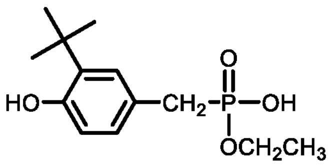

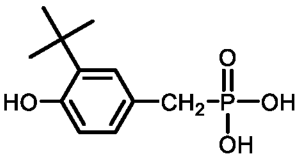
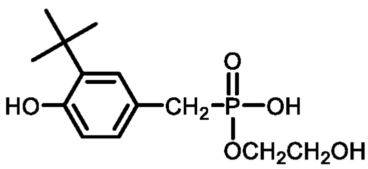
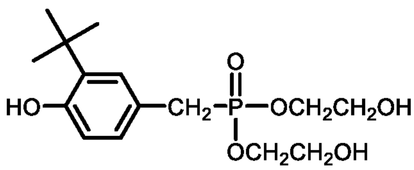

Accordingly, 9 modified products derived from dialkyl 3,5-di-tert-butyl-4-hydroxybenzyl phosphonate represented by above Chemical Formulae are include in the phosphorus compounds of the present invention.

When Irganox1222 is used as the phosphorus compound, at least one of 9 types of residues of the phosphorus compounds as shown in the following Table 1 are contained in the polyester resin. When at least one type from 9 types of hindered phenol structure shown in Table 1 is detected by the method involving measurement of P-NMR, the polyester resin (B) is regarded to be a polyester resin produced with a polymerization catalyst containing a phosphorus compound having phosphorus element and hindered phenol structure in the same molecule. The phosphorus compound having hindered phenol structure allows the polymerization catalyst to work with sufficient polymerization activity, and also enables a decrease in catalyst cost.

[Table 1]

| Structure from phosphorus compound / Phenolic structure | 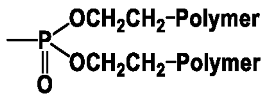 | 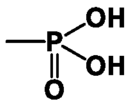 | 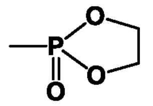 |
|---|---|---|---|
| 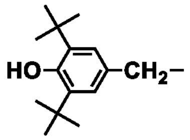 | (Chemical Formula 1) | (Chemical Formula 4) | (Chemical Formula 7) |
| 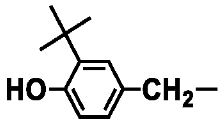 | (Chemical Formula 2) | (Chemical Formula 5) | (Chemical Formula 8) |
| 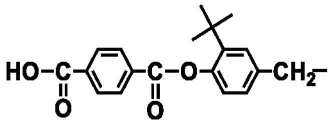 | (Chemical Formula 3) | (Chemical Formula 6) | (Chemical Formula 9) |

In the present invention, the phosphorus compound has at least one type of hindered phenol structure from above structure represented with Chemical Formulae 1, 4, and 7.

The polyester resin (B) comprises phosphorus element at a content of from 13 to 31 ppm by mass, preferably 15 to 29 ppm by mass, and more preferably 16 to 28 ppm by mass. The phosphorus element in the polyester resin (B) of less than 13 ppm by mass causes a decrease in polymerization activity and an increase in the amount of aluminum-based foreign matter. The phosphorus element in the polyester resin (B) of more than 31 ppm by mass adversely causes a decrease in polymerization activity or an increase in the amount of the phosphorus compound added, leading to an increase in catalyst cost.

The polyester resin (B) comprises aluminum element and phosphorus element at a mole ratio of the phosphorus element with respect to the aluminum element of from 1.32 to 1.80, preferably 1.38 to 1.68, and the ratio may be referred to as ‘a residual mole ratio of phosphorus element with respect to aluminum element’ to distinguish from ‘addition mole ratio of phosphorus element with respect to aluminum element’ described later in the following. As described above, the aluminum element and the phosphorus element in the polyester resin (B) are originating from the aluminum compound and the phosphorus compound contained in the polymerization catalyst for the polyester resin (B). The use of the aluminum compound along with the phosphorus compound at a specific ratio enables functional formation of a complex having catalytic activity in a polymerization system, thereby allowing the catalyst to work with sufficient polymerization activity. Although the catalyst/production cost of a polyester resin produced with a polymerization catalyst containing an aluminum compound and a phosphorus compound is high compared to a polyester resin produced with a catalyst such as an antimony catalyst, the use of the aluminum compound along with the phosphorus compound at a specific ratio allows a catalyst to work with sufficient polymerization activity with a decrease in catalyst cost. A residual mole ratio of the phosphorus element with respect to the aluminum element of less than 1.32 causes decreases in thermal stability and thermal oxidation stability and an increase in the amount of aluminum-based foreign matter. In contrast, a residual mole ratio of the phosphorus element to the aluminum element of more than 1.80 indicates that the amount of the phosphorus compound added is too high, resulting in an increase in catalyst cost.

The aluminum compound and the phosphorus compound may be used as a polymerization catalyst to produce the polyester resin (B) in combination with another polymerization catalyst such as the antimony compound, the germanium compound, and the titanium compound, to the extent that problems in characteristics, processability, and color tone of the polyester resin (B) are not caused. The polyester resin (B) comprises antimony element at a content of preferably 30 ppm by mass or less, germanium element at a content of preferably 10 ppm by mass or less, and titanium element at a content of preferably 3 ppm by mass or less. However, minimal amounts of such other polymerization catalysts should be used.

The content of the aluminum element corresponding to the aluminum-based foreign matter in the polyester resin (B) is preferably 3000 ppm by mass or less, more preferably 2800 ppm by mass or less, further preferably 2000 ppm by mass or less, and further more preferably 1500 ppm by mass or less. The aluminum-based foreign matter is

generated by the aluminum compound for the polymerization catalyst and is a foreign matter insoluble in the polyester resin (B). The content of the aluminum-based foreign matter exceeding above range may cause quality deterioration of molded body due to fine foreign matters insoluble in the polyester resin (B). In addition, clogging of a filter in filtration of the polyester resin may be increased in polycondensation and molding steps. Although a preferred lower limit of the content of the aluminum element corresponding to the aluminum-based foreign matter is preferably 0 ppm by mass, the lower limit is approximately 300 ppm by mass due to technical difficulties.

In this specification, as is clear from the measurement of aluminum element by a method described later, the content of the aluminum element corresponding to the aluminum-based foreign matter is an index to evaluate a relative amount of the aluminum-based foreign matter based on the amount of the aluminum element, and does not indicate an absolute amount of the aluminum-based foreign matter contained in the polyester resin.

The polyester resin (B) has an intrinsic viscosity of preferably 0.56 dl/g or more, more preferably from 0.56 to 0.90 dl/g, further preferably 0.60 to 0.80 dl/g, and particularly preferably 0.65 to 0.75 dl/g. When the polyester resin (B) has an intrinsic viscosity of less than 0.56 dl/g, transport of the polyester resin (B) by air causes generation of friction among polyester resin pellets or friction among polyester resin pellets and air supply pipelines, resulting in large quantities of fine particles in some cases. The production of the polyester resin (B) having an intrinsic viscosity of more than 0.62 dl/g by melt polymerization alone may cause a decrease in economic efficiency; hence, the polyester resin (B) having an intrinsic viscosity of more than 0.62 dl/g is preferably produced through solid phase polymerization of the polyester resin (B) produced by melt polymerization.

The polyester resin (B) has an intrinsic viscosity retention rate of preferably 93% or more, more preferably 94% or more, and further preferably 95% or more. The polyester resin (B) having an intrinsic viscosity retention rate of less than 93% may cause lowered intrinsic viscosity retention rate of the polyester resin composition (C), leading to insufficient recyclability. The polyester resin (B) has the upper limit of the intrinsic viscosity retention rate of preferably 100%, however, the limit is approximately 99% due to technical difficulties.

The method for producing the polyester resin (B) will be described later.

[Polyester resin composition (C)]

The polyester resin composition (C) is preferably produced by mixing the polyester resin (A) and the polyester resin (B) in a mass ratio of from 5 : 95 to 95 : 5. That is, in the polyester resin composition (C), an amount of the polyester resin (A) with respect to 100 parts by mass of a total amount of the polyester resin (A) and the polyester resin (B) is preferably from 5 to 95 parts by mass. Controlling of the amount of the polyester resin (A) to above range may prevent coloring and a decrease in molecular weight of the polyester resin composition (C). In this specification, the prevention of coloring of the polyester resin means that an L-value and a b-value of the polyester resin composition are kept from being raised even after several times of recycling i.e., re-kneading. When the blend ratio of the polyester resin (A) is more than 95 parts by mass, the intrinsic viscosity retention rate of the polyester resin composition (C) may become low, resulting in insufficient recyclability. In contrast, when the blend ratio of the polyester resin (A) is less than 5 parts by mass, prevention effect of coloring may be saturated, and economic efficiency may be decreased. Even though a residual mole ratio of the phosphorus element to the aluminum element controlled to above range, the polyester resin (B) is produced with the polymerization catalyst containing an aluminum compound and a phosphorus compound, therefore, catalyst cost, i.e., production cost is high compared that in production of polyester resins with a catalyst of, for example, an antimony catalyst. However, a combination of the polyester resin (A) and the polyester resin (B) enables an increase in recyclability with a decrease in production cost. In the present invention, the production cost of the polyester resin (B) is reduced as much as possible. The polyester resin (A) blended in higher ratio can contribute to reduction in the production cost of the polyester resin composition (C), however, the color tone of the polyester resin composition is more likely to be decreased as the number of recycling cycles increase. In contrast, the polyester resin (B) blended in higher ratio can contribute to reduction in deterioration in color tone of the polyester resin composition (C) even after several times of recycling, however, the production cost may be increased. The mass ratio between the polyester resin (A) and the polyester resin (B) is more preferably from 20 : 80 to 80 : 20 and further preferably from 25 : 75 to 75 : 25.

The polyester resin composition (C) can be produced by dry blending the polyester resin (A) and the polyester resin (B). Alternatively, the polyester resin (A) and the polyester resin (B) can be kneaded by a method of melt-extrusion, to produce the polyester resin composition (C). In this case, the polyester resin (A) and the polyester resin (B) are dry blended at first, and then the polyester resin composition (C) can be produced by melting and kneading the blended resins with a general kneading apparatus of resins such as banbury mixer, kneader, single-screw extruder, twin-screw extruder, four-screw extruder, and single-screw planetary extruder. Among them, twin-screw extruder, four-screw extruder, and single-screw planetary extruder are preferable due to activated surface renewal. The extruder preferably has a vent port of at least one, preferably 2 or more, and further preferably 3 or more. In a preferred embodiment, the vent port is connected to a decompression system to prevent degradation of the polyester resin composition (C).

The polyester resin composition (C) has an intrinsic viscosity of preferably from 0.56 to 0.90 dl/g, more preferably

0.60 to 0.80 dl/g, and further preferably 0.70 to 0.75 dl/g. The intrinsic viscosity of the polyester resin composition (C) of more than 0.90 dl/g may cause a decrease in economic efficiency.

The polyester resin composition (C) has an intrinsic viscosity retention rate of preferably 89% or more, more preferably 90% or more, further preferably 92% or more, and particularly preferably 94% or more. The intrinsic viscosity retention rate of the polyester resin composition (C) of less than 89% may cause insufficient recyclability. Although the upper limit of the intrinsic viscosity retention rate of the polyester resin composition (C) is preferably 100%, the limit is approximately 99% due to technical difficulties. The polyester resin composition (C) preferably has a higher intrinsic viscosity retention rate than that of the polyester resin (A). The description of merely intrinsic viscosity retention rate' regarding the polyester resin composition (C) means the intrinsic viscosity retention rate after one-time of re-kneading of the polyester resin composition (C) in this specification. In addition, other physical properties of the polyester resin composition (C) indicate physical properties after one-time of re-kneading of the polyester resin composition (C) unless otherwise specified.

The polyester resin composition obtained by one time of re-kneading of the polyester resin composition (C) contains CT (cyclic trimer) in an amount of preferably 6600 ppm or less. The amount of CT is more preferably 6400 ppm or less, and further preferably 6000 ppm or less. Although the lower limit is not limited, the lower limit is approximately 2500 ppm due to technical difficulties. The amount of CT of more than 6600 ppm may cause mold fouling in a molding step.

In the subtraction of the CT amount of the polyester resin composition obtained by one time of re-kneading of the polyester resin composition (C) from the CT amount of the polyester resin composition obtained by three times of re-kneading of the polyester resin composition (C) (hereinafter, an obtained value is referred to as ΔCT), the ΔCT is preferably 900 ppm or less. The ΔCT is more preferably 700 ppm or less, and further preferably 600 ppm or less. Although the lower limit of ΔCT is preferably 0 ppm, the lower limit is approximately 200 ppm due to technical difficulties. The ΔCT of more than 900 ppm may cause mold fouling in a molding step.

When the polyester resin composition (C) comprises the polyester resin (B) produced with the phosphorus compound available as above Irganox1222, P-NMR measurement of the polyester resin composition (C) detects at least one of nine types of hindered phenol structure shown in Table 1. When a phosphorus compound having phosphorus element and hindered phenol structure in the same molecule is used as a polymerization catalyst other than Irganox1222, hindered phenol structure is detected similarly as above.

[Hollow molded body (D)]

A method for producing a hollow molded body (D) is not particularly limited. For example, the hollow molded body (D) can be produced by a method (a method via melt-kneading) involving melt-molding of the polyester resin composition (C) into the hollow molded body, alternatively, a method (a direct molding method) involving directly supplying dry blended polyester resin (A) and polyester resin (B) to equipment for producing a hollow molded body by molding.

Since the polyester resin (B) is produced with a polymerization catalyst comprising an aluminum compound and a phosphorus compound, catalyst cost, i.e., production cost is high compared that in production of polyester resins with a catalyst of, for example, an antimony catalyst. However, the use of the polyester resin (A) in combination with the polyester resin (B) in the production of the hollow molded body (D) enables an increase in recyclability with a decrease in production cost. In the present invention, the production cost of the polyester resin (B) is reduced as much as possible. The polyester resin (A) blended in higher bland ratio can reduce the production cost of the hollow molded body (D), however, the color tone of the polyester resin composition is more likely to be decreased as the number of recycling cycles increases. In contrast, the polyester resin (B) blended in higher ratio can contribute to reduction in deterioration in color tone of the polyester resin composition (C) even after several times of recycling, however, the production cost may be increased. The blend ratio between the polyester resin (A) and the polyester resin (B) can be appropriately determined according to market requirements, and the polyester resin (A) and the polyester resin (B) may preferably be blended in a mass ratio of from 5 : 95 to 95 : 5 to produce a hollow molded body (D).

The fields of use of the hollow molded body (D) are not particularly limited, and the hollow molded body (D) is applicable to a beverage container for mineral water, juice, wine, and whisky; a container for household and dish washing detergent; a container as a bottle of baby feeding, for food bottling, hair care products, and cosmetic products. Since the hollow molded body (D) is produced by molding the polyester resin composition (C) of high quality or of a polyester resin composition obtained by blending high-quality polyester resin (B), a container of the hollow molded body (D) collected after use can be regenerated and used as a polyester resin still having high quality, contributing to solving various problems, for example, resource depletion, marine debris, and global warming.

A method for producing a hollow molded body is not particularly limited. In one method, dry blend of the polyester resin (A) and the polyester resin (B) is vacuum dried and then molded with a molding machine, for example, extrusion molding machine or injection molding machine. In another method, the polyester resin composition (C) is introduced to a molding machine in a molten state to be molded into a bottomed preform which is then produced as a final product by a blow molding method such as stretch blow molding, direct blow molding, or extrusion blow molding. A molded body

produced by a molding machine, such as extrusion molding machine or injection molding machine, can also be available as a hollow molded body as a final product.

The hollow molded body may have multilayered structure including a gas barrier layer comprising polyvinyl alcohol or polymethaxylylene diamine adipate, or a light-blocking resin layer. In addition, the inside and the outside of the container of the hollow molded body can be coated with a layer of metals such as aluminum and diamond-like carbon by PVD (physical vapor deposition method) or CVD (chemical vapor deposition method).

The opening portion of the hollow molded body can have increased crystallinity by containing other resins such as polyethylene, and an inorganic nucleating agents such as talc.

The polyester resin composition (C) may be molded into the hollow molded body (D) by the method described above; for example, the polyester resin composition (C) produced through solid-phase polymerization and thus having increased intrinsic viscosity and decreased CT amount may be molded into a hollow molded body (D).

Each of the polyester resin composition (C), and a polyester resin composition obtained by dry blending the polyester resin (A) and the polyester resin (B) has controlled intrinsic viscosity retention rate and controlled coloration, therefore, the polyester resin composition can be preferably applied to products such as fibers, non-woven fabrics, sheets, and films, as well as a hollow molded body (D).

[Method for producing polyester resin (B)]

Next, a method for producing the polyester resin (B) will be described. The polyester resin (B) can be produced by a method comprising conventional steps except that the polyester polymerization catalyst containing an aluminum compound and a phosphorus compound is used for producing polyester in the present invention. In addition, the polymerization catalyst is preferably added in a manner satisfying the following (4) and (5), and more preferably in a manner further satisfying the following (6) in addition to above (4) and (5). Preferred numerical ranges of the following (4) to (6) are described above.

(4) The polyester resin (B) comprises aluminum element at a content of from 9 to 20 ppm by mass.
(5) The polyester resin (B) comprises phosphorus element at a content of from 13 to 31 ppm by mass.
(6) The polyester resin (B) comprises the aluminum element and the phosphorus element at a residual mole ratio of the phosphorus element with respect to the aluminum element of 1.32 or more and 1.80 or less.

The polyester resin (B) is preferably produced by a method comprising a first step of synthesizing polycondensate (low-order condensate), or oligomer of polyester as an intermediate, and a second step of conducting polycondensation of the intermediate.

Also, a solution ‘S’ obtained by dissolving an aluminum compound and a solution ’T’ obtained by dissolving a phosphorus compound are preferably added to the intermediate after the first step and before the second step in a manner satisfying the following (7) to (9). The polycarboxylic acid and ester-forming derivative thereof, the hydroxycarboxylic acid allowed to be added in small amount and the ester-forming derivative thereof, and the cyclic ester allowed to be added in small amount are not distill off from the reaction system in the polymerization step to produce the polyester resin (B), and all the use amount of the catalyst initially added to the system remains in the obtained polyester resin (B); hence, the mass of the polyester produced can be calculated from the amount of the above monomers.

(7) The amount of the aluminum element added with respect to the polyester resin (B) produced is from 9 to 20 ppm by mass, more preferably 9 to 19 ppm by mass, further preferably 10 to 17 ppm by mass, and particularly preferably 12 to 17 ppm by mass.
(8) The amount of the phosphorus element added with respect to the polyester resin (B) produced is from 20 to 40 ppm by mass, more preferably 20 to 38 ppm by mass, and further preferably 21 to 36 ppm by mass.
(9) The mole ratio of the addition amount (8) of the phosphorus element with respect to the addition amount (7) of the aluminum element (hereinafter may be referred to as ‘addition mole ratio of the phosphorus element with respect to the aluminum element’) is 1.50 or more and 2.50 or less, more preferably 1.50 to 2.30, and further preferably 1.60 to 2.20.

The method for producing the low-order condensate (low polymer) or the oligomer of the polyester in the first step is not particularly limited.

The polyester resin (B) can be produced by a method including conventional steps except that a polyester polymerization catalyst containing an aluminum compound and a phosphorus compound is used and the amount of the polyester polymerization catalyst is taken into consideration. For example, polyethylene terephthalate can be produced by a direct esterification method in which terephthalic acid, ethylene glycol, and other copolymerization components, if needed, are reacted directly to be esterified while water is distilled off from the system, polycondensation is subsequently

carried out under normal or reduced pressure, alternatively an ester exchange method in which dimethyl terephthalate, ethylene glycol, and other copolymerization components, if needed, are reacted directly to be esterified while methanol is distilled off from the system, polycondensation is subsequently carried out under normal or reduced pressure. Further, solid-phase polymerization may be conducted to increase an intrinsic viscosity, if needed. The amount (mass) of the polyester resin (B) produced can be calculated from the amount (mass) of polycarboxylic acids including dicarboxylic acids as raw materials.

In either of these methods, the esterification or ester exchange reaction may be conducted in one or multiple stages.

The polyester resin produced by melt polymerization can be additionally polymerized by solid-phase polymerization method. The solid-phase polymerization can be conducted with a continuous reactor similarly as melt polymerization.

When continuous polycondensation apparatus include three or more reactors (i.e., three-stage polymerization method including an initial stage, an intermediate stage, and a late stage), the first stage is defined as the initial stage, the final stage is defined as the late stage, and stages from the second stage to the stage before the final stage are defined as the intermediate stage of the polycondensation reaction. Preferably, the reaction proceeds in the intermediate stage under polymerization reaction conditions are controlled to intermediate conditions between the initial stage and the final stage. Preferably, the degrees of increases in intrinsic viscosities in each stage are smoothly distributed.

(Solid-phase polymerization method)

In order to increase intrinsic viscosity, the polyester resin produced by melt polymerization may be subjected to solid-phase polymerization. The polyester resin may be subjected to solid-phase polymerization by batch type polymerization method or continuous polymerization method. The solid-phase polymerization is preferably conducted in continuous processing apparatus similarly as melt-polymerization.

The polyester resin produced by melt-polymerization is additionally polymerized preferably by solid-phase polymerization method in order to decrease CT amount in the polyester resin (B). The polyester obtained in the second step (melt-polymerization) is powdered and granulated and then subjected to solid-phase polymerization. The powdered and granulated polyester is in the shape of chips, pellets, flakes, or powder, and chips and pellets are preferable among them.

The solid-phase polymerization may be conducted by heating powdered and granulated polyester at a temperature not exceeding the melting point of the polyester, under circulation of an inert gas or under reduced pressure. The solid-phase polymerization may be conducted in one stage or in multiple stages.

The powdered and granulated polyester may be pre-crystallized by heating at a temperature lower than the temperature at which solid-phase polymerization is conducted first, and then the polyester may be subjected to solid-phase polymerization.

The pre-crystallization step may be conducted by heating the powdered and granulated polyester in a dried state, normally at a temperature of from 120 to 200°C, preferably 130 to 180°C, for 1 minute to 4 hours. Alternatively, the pre-crystallization step may be conducted by heating the powdered and granulated polyester in an atmosphere of water vapor, an inert gas containing water vapor, or nitrogen containing water vapor, normally at a temperature of from 120 to 200°C for 1 minute or more.

The polyester obtained by melt polymerization as described above is then, for example, chipped and transported from pipes to a storage silo or solid-phase polymerization step. When the chips are transported, for example, by forced low-density transportation method using air, large impact force is applied on the surface of the melt-polymerized polyester chips due to collision with piping, causing large amounts of fine particles and film-form materials. These fine particles and film-form materials can promote crystallization of polyesters. When large amounts of fine particles and film-form materials exist, a molded body may be produced with significantly decreased transparency. Accordingly, in one preferred embodiment, a step for removing the fine particles and the film-form materials is included.

The method for removing the fine particles and the film-form materials is not particularly limited. The fine particles and the film-form materials may be removed, for example, by a method including a vibration sealing step, an air stream classification step by air stream, or a gravitation classification step, which are separately provided during the intermediate step between the solid phase polymerization step and a step provided after the solid phase polymerization step.

When the catalyst containing the aluminum compound and the phosphorus compound is used, the catalyst may be added in the form of preferably a slurry or a solution, more preferably a solution obtained by dissolving the catalyst in a solvent such as water or glycol, further preferably a solution obtained by dissolving the catalyst in a solvent of water and/or glycol, and most preferably a solution obtained by dissolving the catalyst in ethylene glycol.

The solution ‘S’ obtained by dissolving the aluminum compound and the solution ’T’ obtained by dissolving the phosphorus compound are preferably added in any step before the start of polymerization reaction in the production process of the polyester resin (B), and the solutions are added in a manner such that the contents (residual amount) of

the aluminum element and the phosphorous element in the polyester resin (B) satisfy the ranges specified by above (4) to (6).

By adding the solution 'S' obtained by dissolving the aluminum compound and the solution 'T' obtained by dissolving the phosphorus compound in the amounts that allows the aluminum element and the phosphorous element contents (residual amount) in the polyester resin (B) to satisfy ranges specified by above (4) to (6), a complex having catalytic activity is formed functionally in the polymerization system, and the catalyst can work with sufficient polymerization activity. In addition, the generation of the aluminum-based foreign matter can be prevented.

All the use amount of aluminum atom initially added as a catalyst in the system remains in the polyester resin (B) produced through polymerization, despite reduced pressure environment in polymerization of the polyester resin. In other words, the amount of the aluminum compound is almost unchanged before and after polymerization; addition of the aluminum atom in an amount of from 9 to 20 ppm by mass with respect to the intermediate results in the content of the aluminum atom in the polyester resin (B) of from 9 to 20 ppm by mass.

Also, the phosphorus compound that works along with the aluminum compound as a catalyst is partially distilled off from the system under reduced pressure environment to polymerize the polyester resin, specifically, by approximately 10 to 40% of use amount initially added as the catalyst to the system. The percentage of the phosphorus compound removed from the system changes according to the addition mole ratio of the phosphorus element with respect to the aluminum element, basicity or acidity of the solution obtained by dissolving an aluminum compound added and the solution obtained by dissolving the phosphorus compound added, or a method for adding the aluminum compound-containing solution and the phosphorus compound-containing solution (whether the solutions are added in the form of one solution or added separately). Therefore, the amount of the phosphorus compound-containing solution added should appropriately be controlled so that an addition amount of the phosphorus compound in the polyester resin (B) as a final product preferably satisfies above (5).

The solution 'S' obtained by dissolving the aluminum compound and the solution 'T' obtained by dissolving the phosphorus compound are preferably added at the same time. In more preferred embodiment, the solution 'S' obtained by dissolving the aluminum compound and the solution 'T' obtained by dissolving the phosphorus compound may be prepared as a mixed solution in advance, by mixing them based on a ratio for adding them to the intermediate, and the obtained one solution is then added to the intermediate. The solutions may be made to one solution by a method of, for example, mixing the solutions in a tank or mixing them at confluence in the middle of piping for adding a catalyst in advance.

When the solutions or the one solution is added to a reaction chamber, the content of the reaction chamber is preferably stirred at higher speed. When the solutions or the one solution is added to piping connecting reaction chambers, apparatus such as an in-line mixer may be provided preferably to mix the solutions or the one solution quickly and uniformly.

In case where the solution 'S' obtained by dissolving the aluminum compound and the solution 'T' obtained by dissolving the phosphorus compound are separately added, a foreign matter originating from the aluminum compound is likely to be generated, causing a decrease in crystallization temperature during heating, an increase in crystallization temperature during cooling, and insufficient catalyst activity. The simultaneous addition of the aluminum compound and the phosphorus compound enables rapid and effective formation of a complex having polymerization activity from the aluminum compound and the phosphorus compound. In contrast, separate addition of the aluminum compound and the phosphorus compound causes insufficient formation of the complex from the aluminum compound and the phosphorus compound. In addition, the aluminum compound failed to form a complex with the phosphorus compound may precipitate as a foreign matter.

The solution 'S' obtained by dissolving the aluminum compound and the solution 'T' obtained by dissolving the phosphorus compound are preferably added before the start of polymerization reaction and after the completion of esterification reaction or ester exchange reaction, more preferably the solutions are added to the intermediate after the first step and before the second step. The addition of the solutions before the completion of the esterification reaction or the ester exchange reaction may cause an increase in the amount of aluminum-based foreign matter.

When the polyester resin (B) consists of at least one selected from polycarboxylic acids or ester-forming derivatives thereof and at least one selected from polyhydric alcohols or ester-forming derivatives thereof, the solution 'S' is a glycol solution obtained by dissolving the aluminum compound and the solution 'T' is a glycol solution obtained by dissolving the phosphorus compound.

<Heat treatment of phosphorus compound>

The phosphorus compound used to produce the polyester resin (B) is preferably a phosphorus compound after heat treatment in a solvent. The solvent is not limited as long as the solvent is at least one type selected from the group consisting of water and alkylene glycols. The alkylene glycol is preferably a solvent which can solve a phosphorus compound, and more preferably a glycol exemplified with ethylene glycol which is a constituent component of the polyester resin (B). The heat treatment of the phosphorus compound in the solvent is preferably conducted after the

phosphorus compound is dissolved in the solvent, however, the phosphorus compound may not be completely dissolved.

The heat treatment is conducted under the conditions of a heat treatment temperature of from preferably 170 to 196°C, more preferably 175 to 185°C, further preferably 175 to 180°C, for heat treatment time of preferably from 30 to 240 minutes, and more preferably 50 to 210 minutes.

The concentration of the phosphorus compound in the heat treatment step is preferably 3 to 10% by mass.

The heat treatment allows the acidity of the phosphorus compound contained in the glycol solution to be kept constant, further, the use of the aluminum compound along with the phosphorus compound enables improvement in polymerization activity, a decrease in the amount of aluminum-based foreign matter caused by the polymerization catalyst, and a decrease in the amount of the phosphorus compound distilled off in the polymerization step, leading to improvement in economic efficiency. Therefore, the phosphorus compound is preferably subjected to the heat treatment.

EXAMPLES

Hereinafter, the present invention will be described with Examples, however, the scope of the present invention is not limited by the Examples. Evaluations were made by the following methods in Examples and Comparative Examples.

Evaluation methods

(1) Intrinsic viscosity (IV)

About 3 g of a polyester resin sample or preform thereof was frozen and ground, and the obtained ground product was dried at 140°C for 15 minutes. Then, 0.20 g of the dried sample was weighed and made to a solution with a volume of 20 ml by mixing the sample with a mixed solvent of 1,1,2,2-tetrachloroethane and p-chlorophenol (1:3, mass ratio). The solution was stirred at 100°C for 60 minutes to completely dissolve the sample, and then the solution was cooled to room temperature. The resulting solution was then filtrated through a glass filter. Thus obtained sample solution and the solvent were measured to determine dropping time with an Ubbelohde viscometer (manufactured by RIGO Co., Ltd.) controlled to a temperature of 30°C. The intrinsic viscosity [η] was determined according to the following equation in which the meanings of abbreviations were as follows.

$$[\eta] = (-1 + \sqrt{(1 + 4K'\eta Sp)}) / 2K'C$$

$$\eta Sp = (\tau - \tau 0)\ \tau 0$$

[η]: intrinsic viscosity (dl/g)
ηSp: specific viscosity (-)
K': the Huggins constant (= 0.33)
C: concentration (= 1 g/dl)
τ: dropping time of sample (sec)
τ0: dropping time of solvent (sec)

(2) Content of prescribed metal elements in sample

The polyester resin (A-1) described later was weighed in a platinum crucible, carbonized on an electric stove, and incinerated in a muffle furnace under the conditions of 550°C and 8 hours. The incinerated sample was dissolved in 1.2 M hydrochloric acid to prepare a sample solution. The sample solution prepared was measured under the following conditions to determine the contents of antimony element, germanium element, and titanium element in the polyester resin (A-1) by high-frequency inductively coupled plasma emission spectrometry. Similarly, the contents of antimony element, germanium element, and titanium element in polyester resins (E) to (G) described later were determined. In the measurement results, an element with a content of 1 ppm by mass or less was omitted from description. Further, the content of aluminum element in the polyester resin (B) described later was similarly determined by above method.

Apparatus : CIROS-120, manufactured by SPECTRO
Plasma output: 1400 W
Plasma gas: 13.0 L/min
Auxiliary gas: 2.0 L/min
Nebulizer: cross flow nebulizer

Chamber: cyclone chamber
Measurement wavelength: 167.078 nm

(3) Content of phosphorus element in polyester resin (B)

The polyester resin (B) was wet-decomposed with sulfuric acid, nitric acid, and perchloric acid, and then neutralized with aqueous ammonia. Ammonium molybdate and hydrazine sulfate were added to the prepared solution and then absorbance at a wavelength of 830 nm was measured with an ultraviolet-visible absorptiometer (UV-1700, manufactured by SHIMADZU CORPORATION). The phosphorus element content in the polyester resin (B) was determined from a calibration curve prepared in advance.

(4) Amount of aluminum-based foreign matter in polyester resin (B)

In an Erlenmeyer flask (size: 500 mL) with a stirring bar, 30 g of the polyester resin (B) and 250 mL of a solution containing p-chlorophenol/tetrachloroethane (3/1, mass ratio) were charged and the polyester resin was dissolved in the mixed solution by heating at a temperature of from 100 to 105°C for 1.5 hours with a hot stirrer. The resulting solution was filtrated to separate a foreign matter through a polytetrafluoroethylene membrane filter having a diameter of 47 mm and a pore size of 1.0 um (PTFE membrane filter, product name: T100A047A, manufactured by TOYO ROSHI KAISHA,LTD). The effective filtration diameter was 37.5 mm. After the filtration, the filter was washed with 50 mL of chloroform and then dried.

The filtration surface of the membrane filter was subjected to a scanning fluorescent X-ray analyzer (ZSX100e, Rh line bulb: 4.0 kW, manufactured by RIGAKU) to quantify a content of aluminum element. The content of aluminum element was determined by measuring the center portion of the filter having a diameter of 30 mm. A calibration curve for the fluorescent X-ray analysis was prepared by using polyethylene terephthalate resin containing aluminum element at a known content and an apparent aluminum element content was represented by the unit of ppm. The measurement was conducted through detection of Al-K$\alpha$ ray intensity at an X-ray output of 50 kV-70 mA with pentaerythritol as a spectroscopic crystal and PC (proportional counter) as a detector under the conditions of PHA (pulse height analyzer) of 100-300. The content of aluminum element in the polyethylene terephthalate resin for preparing a calibration curve was quantified by high-frequency inductively coupled plasma emission spectrometry.

(5) Detection of hindered phenol structure or residue by degradation of hindered phenol structure in sample

In 2.7 mL of a mixed solvent of hexafluoroisopropanol and deuterated benzene (1:1, mass ratio), 420 mg of sample was dissolved. To the resulting solution, 10 $\mu$L of deuterioacetone solution containing 25% of phosphoric acid was added, and the mixed solution was centrifuged to obtain a supernatant. Then, to the supernatant, trifluoroacetic acid was added in an amount of from 100 to 150 mg, and immediately after that, P-NMR measurement was conducted under the following conditions.

Apparatus: Fourier transform nuclear magnetic resonance device (AVANCE NEO 500, manufactured by BRUKER)
$^{31}$P resonance frequency: 202.456 MHz
Locking solvent: deuterated benzene
Flip angle of detected pulse: 65°
Incorporation time of data: 1.5 seconds
Retardation time: 0.5 seconds
Proton decoupling: full decoupling
Measurement temperature: from 25 to 35°C
Cumulative calculation numbers: from around 20000 to 30000 times

The followings are peak wavelengths of residues represented by the numbers of chemical formulae as shown in Table 1. Detection of these peak wavelengths indicated the presence of hindered phenol structure in a sample.

Chemical Formula 1: 34.5 ppm
Chemical Formula 2: 33.8 ppm
Chemical Formula 3: 31.9 ppm
Chemical Formula 4: 30.5 ppm
Chemical Formula 5: 30.1 ppm
Chemical Formula 6: 28.7 ppm
Chemical Formula 7: 53.6 ppm

Chemical Formula 8: 53.0 ppm
Chemical Formula 9: 51.3 ppm

(6) Quantification of cyclic trimer

A polyester resin sample was frozen and then ground or just ground, and 100 mg of the obtained sample was weighed precisely. The weighed sample was dissolved in 3 mL of a mixed solvent of hexafluoroisopropanol/chloroform (2/3, volume ratio), and the resulting solution was further diluted by adding 20 mL of chloroform. To the diluted solution, 10 mL of methanol was added to precipitate a polymer, and the precipitated polymer was separated by filtration. The filtrate was evaporated to dryness and made up to 10 mL with dimethylformamide. The cyclic trimer in the polyester resin or in the hollow molded body thereof was quantified by high performance liquid chromatography under the following conditions. The operation was repeated five times and the average of the measurement values was determined to be a CT content as a content of the cyclic trimer.

Apparatus: L-7000 (manufactured by Hitachi, Ltd.)
Column: μ-Bondasphere C18, 5 μ, 100 Å, 3.9 mm×15 cm (manufactured by Waters Corporation.)
Solvent: Eluent A: 2% acetic acid/water (v/v)

Eluent B: acetonitrile
Gradient B%: 10 → 100% (0 → 55 minutes)

Flow rate: 0.8 mL/min
Temperature: 30°C
Detector: UV-259 nm

(7) Intrinsic viscosity retention rate of sample

The polyester resin sample was vacuum dried at 140°C for 16 hours to obtain dried polyester resin with a moisture content of 150 ppm or less. The dried polyester resin was then subjected to re-kneading treatment once with a two-screw extruder under the following conditions, and the intrinsic viscosity of the re-kneaded polyester resin was measured to calculate an intrinsic viscosity retention rate according to the following equation. Also, the dried polyester resin was re-kneaded three times with the two-screw extruder under the following conditions, then the intrinsic viscosity of the re-kneaded polyester resin was measured, and an intrinsic viscosity retention rate was calculated according to the following equation. The intrinsic viscosity was measured by the same method as descried in above (1).

Two-screw extruder: KZW15TW-45/60MG-NH(-2200), manufactured by TECHNOVEL CORPORATION
Set temperature: 260°C (actual temperature: from 268 to 270°C)
Screw rotation speed: 200 rpm
Discharge rate: from 1.7 to 2.0 kg/h

Intrinsic viscosity retention rate (%) = 100 × intrinsic viscosity of rekneaded polyster resin / intrinsic viscosity of sample polyster resin

The moisture content was measured by using 0.6 g of sample and a Karl Fischer moisture meter (CA-200, manufactured by Mitsubishi Chemical Analytech Co., Ltd.) based on coulometric titration under the conditions of 230°C, 5 minutes, and nitrogen gas flow rate of 250 mL/min.

(8) Measurement of color

A measurement cell was filled with approximately 50 g of amorphous polyester pellet as a sample, and measurement was conducted by rotating the measurement cell.

Apparatus: precision-type spectrophotometric colorimeter (type: TC-1500SX, manufactured by Tokyo Denshoku CO., LTD.)
Measurement method: a method according to JIS Z8722, transmitted light 0°, -0° method

Detecting element: silicon photodiode array
Light source: halogen lamp 12 V, 100 W, 2000 H
Measuring area: transmitted 25 mmφ
Temperature and humidity conditions: 25°C, RH50%
Measurement cell: φ35 mm, height 25 mm, rotating type (pellet)
Details of measurement: tristimulus values XYZ, CIE chromaticity coordinate, x=X/X+Y+Z, y=Y/X+Y+Z
Hunter Lab color system

The polyester resin was re-kneaded by the same method as described in above (7), and L-value and b-value of the polyester resin after one time of re-kneading and L-value and b-value of the polyester resin after three times of re-kneading were determined.

(9) Compositional analysis of polyester resin (A-1)

In 0.6 ml of a mixed solvent of deuterated hexafluoroisopropanol and deuterated chloroform (1:9, volume ratio), 20 mg of the polyester resin (A-1) was dissolved, and the mixture was centrifuged to collect a supernatant. By using the supernatant, $^1$H-NMR measurement was conducted under the following conditions.

Apparatus: Fourier transform nuclear magnetic resonance device (AVANCE NEO 600, manufactured by BRUKER)
$^1$H resonance frequency: 600.13 MHz
Locking solvent: deuterated chloroform
Flip angle: 30°
Incorporation time of data: 4 seconds
Retardation time: 1 second
Measurement temperature: 30°C
Cumulative calculation numbers: 128 times

Hereinafter, preparation of aluminum compound-containing ethylene glycol solution and phosphorus compound-containing ethylene glycol solution will be described.

<Preparation of aluminum compound-containing ethylene glycol solution ‘s’>

In a preparation tank, an aqueous solution of basic aluminum acetate having concentration of 20 g/L and ethylene glycol having equivalent volume to the aqueous solution (volume ratio) were charged, and the mixture was stirred at room temperature of 23°C for several hours. While the mixture was further stirred at a temperature of from 50 to 90°C for several hours under reduced pressure (3 kPa), water was distilled off from the reaction system, and an aluminum compound-containing ethylene glycol solution ‘s’ with an aluminum compound at a concentration of 20 g/L was prepared.

<Preparation of phosphorus compound-containing ethylene glycol solution ’t’>

A phosphorus compound of Irganox1222 (manufactured by BASF) was charged in a preparation tank along with ethylene glycol. The mixture was heated by stirring at 175°C for 150 minutes under nitrogen substituted atmosphere, and a phosphorus compound-containing ethylene glycol solution ‘t’ with a phosphorus compound at a concentration of 50 g/L was prepared.

<Polyester resin (B)>

Polyester resin (B’-1) (Polyester resin is (B’-1) for Reference Examples, and the polyester resin contained residual aluminum element and residual phosphorus element in conventionally optimal amounts)

A prepared polyester oligomer composed of high-purity terephthalic acid and ethylene glycol and having an esterification rate of about 95% and high-purity terephthalic acid were put in a 10 L stainless steel autoclave equipped with a stirrer, and an esterification reaction was carried out at 260°C to obtain an oligomer mixture. The oligomer mixture had a terminal acidic group concentration of 750 eq/ton and a terminal hydroxylic group rate (OH%) of 59 mol%.

To the obtained oligomer mixture, a mixed solution of one solution obtained by mixing the aluminum compound-containing ethylene glycol solution ‘s’ and the phosphorus compound-containing ethylene glycol solution ‘t’ which were prepared by above methods was added. The mixed solution was prepared so that the contents of elements were 21

ppm by mass as the aluminum element and 58 ppm by mass as the phosphorus element with respect to the mass of the oligomer mixture. The added molar ratio of the phosphorus element with respect to the aluminum element was 2.41. The amount of the polyester resin produced can be calculated from the amount of terephthalic acid added. In Examples, the mixed solution was added to the polyester resin such that the contents of elements were 21 ppm by mass as the aluminum element and 58 ppm by mass as the phosphorus element with respect to the polyester resin produced.

After that, the temperature of the system was raised to 280°C in an hour, and the pressure of the system was gradually decreased to 0.15 kPa during the temperature rise. The polymerization reaction was conducted under such conditions, and a polyester resin having IV of 0.60 dl/g was obtained. Then, thus obtained polyester resin was subjected to solid phase polymerization at 230°C for 7 hours under reduced pressure in a batch-type solid phase polymerization apparatus, to produce a polyester resin (B'-1) having an intrinsic viscosity of 0.70 dl/g. The residual amounts of aluminum element and phosphorus element in the polyester resin (B'-1) were 21 ppm by mass and 45 ppm by mass, respectively, and the residual mole ratio of the phosphorus element with respect to the aluminum element was 1.87. The content of the aluminum element corresponding to the aluminum-based foreign matter in the polyester resin (B'-1) was 710 ppm by mass, and the L-value of the polyester resin (B'-1) was 58.7; hence, the polyester resin (B'-1) was confirmed to have hindered phenol structure.

Polyester resin (B-1)

Polyester resin (B-1) was produced in the same manner as the polyester resin (B'-1) except that the amount of the mixed solution as the contents of aluminum element and phosphorus element added was changed. In the polyester resin (B-1), the residual content of aluminum element was 16 ppm by mass, the residual content of phosphorus element was 26 ppm by mass, and the residual mole ratio of the phosphorus element to the aluminum element was 1.42. The content of the aluminum element corresponding to the aluminum-based foreign matter in the polyester resin (B-1) was 2000 ppm by mass, and the L-value of the polyester resin (B-1) was 58.5; hence, the polyester resin (B-1) was confirmed to have hindered phenol structure.

Polyester resin (B-2)

Polyester resin (B-2) was produced in the same manner as the polyester resin (B'-1) except that the amount of the mixed solution as the contents of aluminum element and phosphorus element added was changed. In the polyester resin (B-2), the residual content of aluminum element was 10 ppm by mass, the residual content of phosphorus element was 16 ppm by mass, and the residual mole ratio of the phosphorus element to the aluminum element was 1.39. The content of the aluminum element corresponding to the aluminum-based foreign matter in the polyester resin (B-2) was 2300 ppm by mass, and the L-value of the polyester resin (B-2) was 56.6; hence, the polyester resin (B-2) was confirmed to have hindered phenol structure.

<Polyester resin (A-1)>

As polyester resin (A-1), polyester resin flakes which were made from recycled polyester and provided by Kyoei Sangyo Co.,Ltd. were used. The composition of the polyester resin flakes made from recycled polyester was analyzed, and the result showed that the polyester resin flakes comprised an ethylene terephthalate constituent unit in an amount of 97 mol% or more. The polyester resin flakes made from the recycled polyester had an intrinsic viscosity of 0.750 dl/g. The content of antimony element was 190 ppm by mass and the content of germanium element was 1.6 ppm by mass in the polyester resin flakes made from the recycled polyester. The content of titanium element was very low with an amount of 1 ppm by mass or less, and the content of titanium element was omitted in Tables 2 and 3. From the contents of antimony element, germanium element, and titanium element, it was demonstrated that the polyester resin flakes were recycled mainly from hollow molded bodies of polyester resins produced with an antimony catalyst.

(Examples 1 to 7 and Reference Example 6)

The polyester resin compositions were produced by melt-kneading the polyester resin (A-1) and the polyester resin (B) in blend ratios shown in Tables 2 and 3. Characteristics of the polyester resin compositions are shown in Tables 2 and 3.

(Comparative Example 1 and Reference Examples 1 to 5)

Characteristics of each of the polyester resin (A-1), the polyester resin (B-1), the polyester resin (B-2), and the following polyester resins (E) to (G) are shown in Table 3. The polyester resins (E) to (G) were polyester resins produced

with at least one of the antimony catalyst, the titanium catalyst, and the germanium catalyst. The contents of each of the antimony element, the titanium element, and the germanium element were measured by the method described above.

Polyester resin (E): N1 manufactured by Indorama Ventures Public Company Limited. (Antimony element content: 270 ppm by mass, intrinsic viscosity: 0.789 dl/g)
Polyester resin (F): H0AF manufactured by Indorama Ventures Public Company Limited. (Titanium element content: 7 ppm by mass, intrinsic viscosity: 0.753 dl/g)
Polyester resin (G): N2G manufactured by Indorama Ventures Public Company Limited. (Germanium element content: 30 ppm by mass, intrinsic viscosity: 0.739 dl/g)

(Comparative Examples 2 to 4)

The polyester resin compositions were produced by melt-kneading the polyester resin (A-1) and any one of polyester resins (E) to (G) in blend ratios shown in Table 3. The characteristics of the polyester resin compositions are shown in Table 3.

[Table 2]

| | Catalyst (ppm) | Example 1 | Example 2 | Example 3 | Example 4 | Example 5 | Example 6 | Example 7 |
|---|---|---|---|---|---|---|---|---|
| (A-1) Flakes of collected polyester resin | Sb: 190 ppm, Ge: 1.6 ppm | 50 | 50 | 30 | 10 | 70 | 90 | 95 |
| (B-1) | Al: 16 ppm, P: 26 ppm | 50 | | 70 | 90 | 30 | 10 | 5 |
| (B-2) | Al: 10 ppm, P: 16 ppm | | 50 | | | | | |
| Residue of hindered phenol structure | | Presence | Presence | Presence | Presence | Presence | Presence | Presence |
| Initial IV value (dl/g) | | 0.73 | 0.72 | 0.72 | 0.71 | 0.74 | 0.75 | 0.75 |
| Intrinsic viscosity retention rate (%) | After one-time of re-kneading | 93 | 92 | 94 | 95 | 91 | 90 | 90 |
| | After three-time of re-kneading | 86 | 83 | 86 | 87 | 82 | 80 | 80 |
| CT content (ppm) | After one-time of re-kneading (h) | 6024 | 6120 | 6980 | 5689 | 6357 | 6663 | 6723 |
| | After three-time of re-kneading (i) | 6530 | 6673 | 6487 | 6236 | 6970 | 7204 | 7230 |
| ΔCT ((i)-(h)) (ppm) | | 506 | 553 | 607 | 647 | 613 | 541 | 507 |
| L-value | After one-time of re-kneading (j) | 64.3 | 53.8 | 64.9 | 66.0 | 53.5 | 61.8 | 61.0 |
| | After three-time of re-kneading (k) | 48.3 | 47.6 | 49.8 | 49.3 | 48.8 | 47.6 | 47.3 |
| ΔL ((j)-(k)) | | 6.0 | 6.2 | 5.1 | 6.7 | 4.7 | 4.2 | 3.7 |
| b-value | After one-time of re-kneading (1) | 3.8 | 3.9 | 3.7 | 3.5 | 3.8 | 4.0 | 4.6 |
| | After three-time of re-kneading (m) | 6.6 | 6.7 | 6.4 | 6.2 | 6.8 | 6.2 | 6.8 |
| Δb ((m)-(l)) | | 1.8 | 1.8 | 1.7 | 1.7 | 2.0 | 2.2 | 2.2 |

[Table 3]

| | Catalyst (ppm) | Comparative Example 1 | Comparative Example 2 | Comparative Example 3 | Comparative Example 4 | Reference Example 1 | Reference Example 2 | Reference Example 3 | Reference Example 4 | Reference Example 5 | Reference Example 6 |
|---|---|---|---|---|---|---|---|---|---|---|---|
| (A-1) Flakes of collected polyester resin | Sb: 190 ppm, Ge: 1.6 ppm | 100 | 50 | 50 | 50 | | | | | | 50 |
| (B-1) | Al: 16 ppm, P: 26 ppm | | | | | 100 | | | | | |
| (B-2) | Al: 10 ppm, P: 16 ppm | | | | | | 100 | | | | |
| (B'-1) | Al: 21 ppm, P: 45 ppm | | | | | | | | | | 50 |
| (E) NI | Sb: 270 ppm | | 50 | | | | | 100 | | | |
| (F) H0AF | Ti: 7 ppm | | | 50 | | | | | 100 | | |
| (G) N2G | Ge: 30 ppm | | | | 50 | | | | | 100 | |
| Residue of hindered phenol structure | | Absence | Absence | Absence | Absence | Presence | Presence | Absence | Absence | Absence | Presence |
| Initial IV value (dl/g) | | 0.75 | 0.77 | 0.75 | 0.74 | 0.73 | 0.73 | 0.79 | 0.75 | 0.74 | 0.73 |
| Intrinsic viscosity retention rate (%) | After one-time of re-kneading | 88 | 86 | 87 | 87 | 97 | 96 | 90 | 93 | 94 | 94 |
| | After three-time of re-kneading | 77 | 78 | 76 | 76 | 87 | 86 | 75 | 78 | 78 | 86 |

(continued)

| | Catalyst (ppm) | Comparative Example 1 | Comparative Example 2 | Comparative Example 3 | Comparative Example 4 | Reference Example 1 | Reference Example 2 | Reference Example 3 | Reference Example 4 | Reference Example 5 | Reference Example 6 |
|---|---|---|---|---|---|---|---|---|---|---|---|
| CT content (ppm) | After one-time of re-kneading (h) | 6863 | 6053 | 6192 | 6132 | 5278 | 5527 | 5938 | 5520 | 5400 | 5967 |
| | After three-time of re-kneading (i) | 7851 | 7261 | 7086 | 7045 | 5683 | 5890 | 7421 | 6321 | 6238 | 6480 |
| ΔCT ((i)-(h)) (ppm) | | 988 | 1208 | 895 | 913 | 405 | 363 | 1483 | 801 | 838 | 513 |
| L-value | After one-time of re-kneading (j) | 49.6 | 51.3 | 50.3 | 53.4 | 57.5 | 55.8 | 51.5 | 50.9 | 57.1 | 55.4 |
| | After three-time of re-kneading (k) | 43.6 | 46.2 | 46.8 | 49.9 | 54.7 | 63.1 | 46.8 | 47.9 | 54.1 | 49.8 |
| ΔL ((j)-(k)) | | 6.0 | 5.1 | 3.5 | 3.5 | 2.8 | 2.7 | 4.7 | 3.0 | 3.0 | 6.8 |
| b-value | After one-time of re-kneading (l) | 5.8 | 4.3 | 3.4 | 4.3 | 2.2 | 3.2 | 2.0 | 1.2 | 2.7 | 3.6 |
| | After three-time of re-kneading (m) | 7.9 | 6.4 | 6.1 | 6.4 | 4.2 | 5.8 | 5.2 | 4.6 | 4.8 | 5.2 |
| Δb ((m)-(l)) | | 2.1 | 2.1 | 2.8 | 2.1 | 2.0 | 2.6 | 3.2 | 3.4 | 2.1 | 1.6 |

In Example 1 to 7, mixing of the polyester resin (B-1) or the polyester resin (B-2) with the polyester resin (A-1) collected for recycling enabled the production of polyester resin composition having high intrinsic viscosity retention rate even after recycling of more than once.

Also, in Examples 1 to 7, mixing of the polyester resin (B-1) or the polyester resin (B-2) with the polyester resin (A-1) collected for recycling enabled the production of polyester resin composition with a scale of darkening represented by L-value kept high and a scale of yellowing represented by b-value kept low even after recycling of more than once. Such characteristics were almost the same as those of Reference Example 6.

Although the amounts of aluminum element and phosphorus element added to the polyester resin (B-1) and the polyester resin (B-2) were fewer compared to the polyester resin (B'-1), the time for the polymerization of the polyester resin (B-1) and the polyester resin (B-2) was shorter, and the produced polyester resins were of high quality because of less amount of aluminum-based foreign matter. In addition, the amount of catalyst added was fewer, leading to a decrease in catalyst cost.

The polyester resin (B-1) in Reference Example 1 and the polyester resin (B-2) in Reference Example 2 showed high recyclability.

Although the polyester resin (A-1) collected for recycling was recycled in Comparative Example 1, the intrinsic viscosity retention rate was decreased with an increase in the number of recycling, resulting in a decrease in molecular weight. In addition, L-value was decreased with an increase in b-value, resulting in coloring.

In Reference Examples 3 to 5, polyester resins containing antimony element, titanium element, or germanium element were used, and in Comparative Examples 2 to 4, the polyester resin (A-1) collected for recycling was mixed with a polyester containing antimony element, titanium element, or germanium element. Although the intrinsic viscosity retention rates of the polyester resins containing the antimony element, the titanium element, or the germanium element (Reference Examples 3 to 5) were high, mixtures of the polyester resin (A-1) collected for recycling and a polyester resin containing the antimony element, the titanium element, or the germanium element (Comparative Examples 2 to 4) had equivalent intrinsic viscosity retention rates to the polyester resin obtained by recycling only the polyester resin (A-1) collected for recycling; accordingly, mixing of the polyester resin containing the antimony element, the titanium element, or the germanium element with the polyester resin (A-1) collected for recycling could not prevented a decrease in molecular weight. In addition, mixing of the polyester resin containing the antimony element, the titanium element, or the germanium element with the polyester resin (A-1) collected for recycling caused increases in CT amount and ΔCT with an increase in the number of recycling, and recyclability was not increased.

## INDUSTRIAL APPLICABILITY

The production of the polyester resin composition (C) by mixing the polyester resin (B) comprising a certain amount of the aluminum compound and the phosphorus compound and the polyester resin (A) collected for recycling can prevent coloring and a decrease in molecular weight of the polyester resin composition (C), leading to low-cost production of polyester resin composition having high recyclability. In addition, the production of hollow molded body (D) from the polyester resin obtained by mixing the polyester resin (B) comprising the aluminum compound and the phosphorus compound and the polyester resin (A) collected for recycling can prevent coloring and a decrease in molecular weight of the hollow molded body (D), leading to production of polyester resin composition having high recyclability.

The polyester resin composition (C) and the hollow molded body (D) can be recycled, thereby contributing to solving various problems, such as resource depletion, increase in marine debris, and global warming.

(Summary)

As shown above, the first embodiment according to the present invention is as follows.

The first embodiment: a method for producing a polyester resin composition (C), comprising a step of mixing a polyester resin (A) collected for recycling and a polyester resin (B) comprising an aluminum compound and a phosphorus compound,

wherein the polyester resin (A) satisfies the following (1) to (3) and the polyester resin (B) satisfies the following (4) to (6):

(1) the polyester resin (A) comprises at least one element selected from the group consisting of antimony element, titanium element, and germanium element,
(2) the polyester resin (A) comprises at least one of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of

the phosphorus element with respect to the aluminum element of 1.32 or more and 1.80 or less.

According to the first embodiment, the production of the polyester resin composition (C) by mixing the polyester resin (B) comprising a certain amount of the aluminum compound and the phosphorus compound and the polyester resin (A) collected for recycling comprising at least one element selected from the group consisting of the antimony element, the titanium element, and the germanium element can prevent coloring and a decrease in the molecular weight of the polyester resin composition (C), leading to low-cost production of polyester resin composition having high recyclability.

The second embodiment: the method for producing the polyester resin composition (C) according to the first embodiment, wherein the polyester resin (B) has an intrinsic viscosity of 0.56 dl/g or more.

According to the second embodiment, large quantities of fine particles due to friction among polyester resin pellets or friction among polyester resin pellets and air supply pipelines are unlikely to be generated in transport of the polyester resin (B) by air.

The third embodiment: the method for producing the polyester resin composition (C) according to the first embodiment, wherein the polyester resin (B) comprises dialkyl 3,5-di-tert-butyl-4-hydroxybenzyl phosphonate as the phosphorus compound.

According to the third embodiment, a catalyst can work with sufficient polymerization activity with a decrease in catalyst cost.

The fourth embodiment: the method for producing the polyester resin composition (C) according to the first embodiment 1, wherein an amount of the polyester resin (A) with respect to 100 parts by mass of a total amount of the polyester resin (A) and the polyester resin (B) is from 5 to 95 parts by mass.

According to the fourth embodiment, coloring and a decrease in the molecular weight of the polyester resin composition (C) can be prevented.

The fifth embodiment: a method for producing a hollow molded body (D), comprising a step of melt-molding the polyester resin composition (C) produced by the method according to any one of the first to fourth embodiments.

According to the fifth embodiment, a production cost will be decreased with an increase in recyclability. The method according to the fifth embodiment comprises a step of molding a hollow molded body (D) by introducing a melted polyester resin composition into a molding machine in a molten state.

The sixth embodiment: a method for regenerating a polyester resin (A) collected for recycling, comprising a step of mixing the polyester resin (A) and a polyester resin (B) comprising an aluminum compound and a phosphorus compound,
wherein the polyester resin (A) satisfies the following (1) to (3) and the polyester resin (B) satisfies the following (4) to (6):

(1) the polyester resin (A) comprises at least one element selected from the group consisting of antimony element, titanium element, and germanium element,
(2) the polyester resin (A) comprises at least one element of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of the phosphorus element with respect to the aluminum element of 1.32 or more and 1.80 or less.

According to the sixth embodiment, used polyester resin (A) collected for recycling containing at least one element selected from the group consisting of the antimony element, the titanium element, and the germanium element can be regenerated to the polyester resin composition (C) having high recyclability.

The seventh embodiment: the method for regenerating the polyester resin (A) according to the sixth embodiment, wherein the polyester resin (B) has an intrinsic viscosity of 0.56 dl/g or more.

According to the seventh embodiment, large quantities of fine particles due to friction among polyester resin pellets or friction among polyester resin pellets and air supply pipelines are unlikely to be generated in transport of the polyester resin (B) by air.

The eighth embodiment: the method for regenerating the polyester resin (A) according to the sixth embodiment, wherein the polyester resin (B) comprises dialkyl 3,5-di-tert-butyl-4-hydroxybenzyl phosphonate as the phosphorus compound.

According to the eighth embodiment, a catalyst can work with sufficient polymerization activity with a decrease in catalyst cost.

The ninth embodiment: the method for regenerating the polyester resin (A) according to the sixth embodiment, wherein an amount of the polyester resin (A) with respect to 100 parts by mass of a total amount of the polyester resin

(A) and the polyester resin (B) is from 5 to 95 parts by mass.

According to the ninth embodiment, coloring and a decrease in molecular weight of the recycled polyester resin composition (C) can be prevented.

The tenth embodiment: a polyester resin composition (C) comprising a mixture of a polyester resin (A) collected for recycling and a polyester resin (B) comprising an aluminum compound and a phosphorus compound,
wherein the polyester resin (A) satisfies the following (1) to (3) and the polyester resin (B) satisfies the following (4) to (6):

(1) the polyester resin (A) comprises at least one element selected from the group consisting of antimony element, titanium element, and germanium element,
(2) the polyester resin (A) comprises at least one element of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of the phosphorus element with respect to the aluminum element of 1.32 or more and 1.80 or less.

According to the tenth embodiment, coloring and a decrease in the molecular weight of the polyester resin composition (C) can be prevented, and a polyester resin composition having high recyclability can be produced at low cost.

The eleventh embodiment: the polyester resin composition (C) according to the tenth embodiment, wherein the polyester resin (B) has an intrinsic viscosity of 0.56 dl/g or more.

According to the eleventh embodiment, large quantities of fine particles due to friction among polyester resin pellets or friction among polyester resin pellets and air supply pipelines are unlikely to be generated in transport of the polyester resin (B) by air.

The twelfth embodiment: the polyester resin composition (C) according to the tenth embodiment, wherein the polyester resin (B) comprises dialkyl 3,5-di-tert-butyl-4-hydroxybenzyl phosphonate as the phosphorus compound.

According to the twelfth embodiment, the catalyst can work with sufficient polymerization activity with a decrease in catalyst cost.

The thirteenth embodiment: the polyester resin composition (C) according to the tenth embodiment, wherein an amount of the polyester resin (A) with respect to 100 parts by mass of a total amount of the polyester resin (A) and the polyester resin (B) is from 5 to 95 parts by mass.

According to the thirteenth embodiment, coloring and a decrease in molecular weight of the polyester resin composition (C) can be prevented.

The fourteenth embodiment: a hollow molded body (D) comprising the polyester resin composition (C) according to any one of the tenth to thirteenth embodiments.

According to the fourteenth embodiment, the hollow molded body (D) can have increased recyclability with a decrease in production cost. The production of the hollow molded body (D) by molding high quality polyester resin composition (C) enables reuse of the collected polyester resin with its quality maintained high, even after the use as various containers, thereby contributing to solving various problems, such as resource depletion, marine debris, and global warming.

## Claims

1. A method for producing a polyester resin composition (C), comprising a step of mixing a polyester resin (A) collected for recycling and a polyester resin (B) comprising an aluminum compound and a phosphorus compound,
wherein the polyester resin (A) satisfies the following (1) to (3) and the polyester resin (B) satisfies the following (4) to (6):

    (1) the polyester resin (A) comprises at least one element selected from the group consisting of antimony element, titanium element, and germanium element,
    (2) the polyester resin (A) comprises at least one of the antimony element, the titanium element, and the germanium element at a total content of from 2 to 500 ppm by mass,
    (3) the polyester resin (A) has an intrinsic viscosity of from 0.5 to 0.8 dl/g,
    (4) the polyester resin (B) comprises aluminum element at a content of from 9 to 20 ppm by mass,
    (5) the polyester resin (B) comprises phosphorus element at a content of from 13 to 31 ppm by mass, and
    (6) the polyester resin (B) comprises the aluminum element and the phosphorus element at a residual mole ratio of the phosphorus element with respect to the aluminum element of 1.32 or more and 1.80 or less.

2. The method for producing the polyester resin composition (C) according to claim 1, wherein the polyester resin (B) has an intrinsic viscosity of 0.56 dl/g or more.

3. The method for producing the polyester resin composition (C) according to claim 1, wherein the polyester resin (B) comprises dialkyl 3,5-di-tert-butyl-4-hydroxybenzyl phosphonate as the phosphorus compound.

4. The method for producing the polyester resin composition (C) according to claim 1, wherein an amount of the polyester resin (A) with respect to 100 parts by mass of a total amount of the polyester resin (A) and the polyester resin (B) is from 5 to 95 parts by mass.

5. A method for producing a hollow molded body (D), comprising a step of melt-molding the polyester resin composition (C) produced by the method according to any one of claims 1 to 4.

6. A method for regenerating a polyester resin (A) collected for recycling, comprising a step of mixing the polyester resin (A) and a polyester resin (B) comprising an aluminum compound and a phosphorus compound, wherein the polyester resin (A) satisfies the following (1) to (3) and the polyester resin (B) satisfies the following (4) to (6):

(1) the polyester resin (A) comprises at least one element selected from the group consisting of antimony element, titanium element, and germanium element,
(2) the polyester resin (A) comprises at least one element of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of the phosphorus element with respect to the aluminum element of 1.32 or more and 1.80 or less.

7. The method for regenerating the polyester resin (A) according to claim 6, wherein the polyester resin (B) has an intrinsic viscosity of 0.56 dl/g or more.

8. The method for regenerating the polyester resin (A) according to claim 6, wherein the polyester resin (B) comprises dialkyl 3,5-di-tert-butyl-4-hydroxybenzyl phosphonate as the phosphorus compound.

9. The method for regenerating the polyester resin (A) according to claim 6, wherein an amount of the polyester resin (A) with respect to 100 parts by mass of a total amount of the polyester resin (A) and the polyester resin (B) is from 5 to 95 parts by mass.

10. A polyester resin composition (C) comprising a mixture of a polyester resin (A) collected for recycling and a polyester resin (B) comprising an aluminum compound and a phosphorus compound, wherein the polyester resin (A) satisfies the following (1) to (3) and the polyester resin (B) satisfies the following (4) to (6):

(1) the polyester resin (A) comprises at least one element selected from the group consisting of antimony element, titanium element, and germanium element,
(2) the polyester resin (A) comprises at least one element of the antimony element, the titanium element, and the germanium element at a total content of from 2 to 500 ppm by mass,
(3) the polyester resin (A) has an intrinsic viscosity of from 0.5 to 0.8 dl/g,
(4) the polyester resin (B) comprises aluminum element at a content of from 9 to 20 ppm by mass,
(5) the polyester resin (B) comprises phosphorus element at a content of from 13 to 31 ppm by mass, and
(6) the polyester resin (B) comprises the aluminum element and the phosphorus element at a residual mole ratio of the phosphorus element with respect to the aluminum element of 1.32 or more and 1.80 or less.

11. The polyester resin composition (C) according to claim 10, wherein the polyester resin (B) has an intrinsic viscosity of 0.56 dl/g or more.

12. The polyester resin composition (C) according to claim 10, wherein the polyester resin (B) comprises dialkyl 3,5-di-tert-butyl-4-hydroxybenzyl phosphonate as the phosphorus compound.

13. The polyester resin composition (C) according to claim 10, wherein an amount of the polyester resin (A) with respect to 100 parts by mass of a total amount of the polyester resin (A) and the polyester resin (B) is from 5 to 95 parts by mass.

14. A hollow molded body (D) comprising the polyester resin composition (C) according to any one of claims 10 to 13.

**INTERNATIONAL SEARCH REPORT**

International application No.
**PCT/JP2022/024734**

**A. CLASSIFICATION OF SUBJECT MATTER**

***C08L 67/00***(2006.01)i; ***C08G 63/84***(2006.01)i
FI: C08L67/00; C08G63/84

According to International Patent Classification (IPC) or to both national classification and IPC

**B. FIELDS SEARCHED**

Minimum documentation searched (classification system followed by classification symbols)

C08L67/00; C08G63/84

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2002-322254 A (TOYO BOSEKI) 08 November 2002 (2002-11-08)<br>claims, paragraphs [0024]-[0028], [0092]-[0095], [0146], examples | 10-14<br>1-14 |
| X<br>Y | JP 2003-301038 A (TOYO BOSEKI) 21 October 2003 (2003-10-21)<br>claims, paragraphs [0023]-[0030], [0056]-[0059], examples | 1-2, 4-7, 9-11, 13-14<br>1-14 |
| A | JP 2002-249650 A (TOYO BOSEKI) 06 September 2002 (2002-09-06)<br>entire text | 1-14 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 August 2022** | **16 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2022/024734**

| Patent document cited in search report | Publication date (day/month/year) | Patent family member(s) | Publication date (day/month/year) |
|---|---|---|---|
| JP 2002-322254 A | 08 November 2002 | CN 1486336 A<br>claims, p. 18, lines 6-22, p. 84, line 1 to bottom line, examples | |
| JP 2003-301038 A | 21 October 2003 | (Family: none) | |
| JP 2002-249650 A | 06 September 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013154042 A1
- WO 2013154043 A1
- WO 2007032325 A1
- JP 2006169432 A